# EUROPEAN PATENT APPLICATION

(11) **EP 3 926 856 A1**
(43) Date of publication of application: **22.12.2021**
(21) Application number: 20755470.0
(22) Date of filing: 14.02.2020
(51) Int. Cl.: H04B 7/26

(54) **PHYSICAL UPLINK SHARED CHANNEL TRANSMISSION METHOD, TERMINAL, AND NETWORK DEVICE**

(30) Priority: 15.02.2019 CN 201910117789
(71) Applicant: Datang Mobile Communications Equipment Co., Ltd., Beijing 100083 (CN)
(72) Inventor: GAO, Xuejuan, Beijing 100191 (CN)
(74) Representative: dompatent von Kreisler Selting Werner - Partnerschaft von Patent- und Rechtsanwälten mbB
(86) International application number: PCT/CN2020/075211
(87) International publication number: WO 2020/164570

(57) **Abstract**

The present disclosure provides a PUSCH transmission method, a terminal and a network device. The PUSCH transmission method for the terminal includes: when at least one PUSCH in a group of repetition PUSCHs overlaps a PUCCH carrying a first type of UCI, determining whether an RV of the at least one PUSCH is a predetermined RV; and when the RV of the at least one PUSCH is the predetermined RV, dropping the PUCCH carrying the first type of UCI or transmitting the first type of UCI in a next transmission opportunity, otherwise dropping the at least one PUSCH and transmitting the PUCCH carrying the first type of UCI.

## Description

### CROSS-REFERENCE TO RELATED APPLICATION

This application claims a priority of the Chinese patent application No. 201910117789.1 filed on February 15th, 2019, which is incorporated herein by reference in its entirety.

### TECHNICAL FIELD

The present disclosure relates to the field of communications technology, in particular to a Physical Uplink Shared Channel (PUSCH) transmission method, a terminal and a network device.

### BACKGROUND

Scheduling Request (SR) is carried on a Physical Uplink Control Channel (PUCCH), and transmitted on a configured PUCCH resource in accordance with a configured period.

In New Radio (NR) R15, when a Medium Access Control (MAC) determines, before the establishment of a Protocol Data Unit (PDU, which is transmitted on a PUSCH), that there is the SR to be transmitted, the MAC transmits the SR together with data in the PUSCH in the form of Buffer Status Report (BSR). At this time, no positive SR occurs at a physical layer, so the PUCCH is not transmitted on the PUCCH resource corresponding to the SR.

When the MAC determines that there is the SR in the case that the MAC has started to establish the PDU or the establishment of the PDU has been completed, it is impossible to package the SR in the PDU in the form of BSR. At this time, when an MAC layer determines that a resource for the SR overlaps a PUSCH resource carrying the PDU, it does not trigger the physical layer to transmit the positive SR, so the PUCCH is not transmitted on the PUCCH resource corresponding to the SR. Hence, for the PUSCH carrying data (i.e., the PUSCH with Uplink Shared Channel (UL-SCH)), the PUCCH carrying the SR does not overlap the PUSCH at the physical layer.

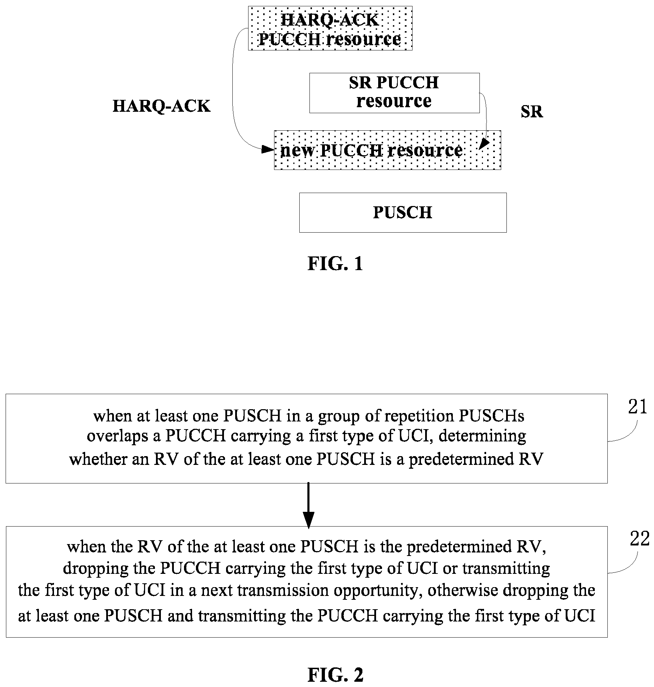

When the MACK layer determines that the SR is to be transmitted and the PUCCH resource carrying the SR does not overlap the PUSCH, the MAC layer triggers the physical layer to transmit the positive SR. When the PUCCH carrying the positive SR overlaps the PUCCH carrying the other Uplink Control Information (UCI), e.g., the PUCCH carrying Hybrid Automatic Repeat reQuest Acknowledgement (HARQ-ACK)/Channel State Information (CSI), the SR is probably transferred to and transmitted on the other PUCCH resource in accordance with a UCI multiplexing rule, as shown in FIG. 1. The PUCCH probably overlaps the PUSCH, indirectly leading to the overlapping between the SR and the PUSCH. Because it is already unable to package the SR, as the BSR, to the data carried in the PUSCH, it is currently speculated that the SR is to be dropped and not to be transmitted.

When the PUSCH does not carry the UL-SCH, i.e., there is not any packaging process of the MAC PDU, it is impossible to transmit the SR on the PUSCH in the form of BSR. At this time, the PUSCH is used to carry Semi-Persistent (SP)-CSI or Aperiodic-CSI (A-CSI), and the CSI is of less significance than the SR, so it is speculated that the PUSCH without UL-SCH is to be dropped and the SR is to be transmitted.

The PUSCH is configured to be configured with repetition transmission, e.g., configured with repetition transmission in a unit of slot. One Transport Block (TB) is configured with repetition transmission through a plurality of PUSCHs, and each repetition PUSCH is transmitted within different slots. Hence, a group of repetition PUSCHs occupy a plurality of slots, the PUSCH is transmitted on a same resource within each slot, and the PUSCH carries same TB information within each slot, so as to improve uplink transmission performance as well as uplink coverage. A Redundant Version (RV) corresponding to each repetition PUSCH is sequentially determined in a predetermined RV sequence in accordance with an initial RV notified through Downlink Control Information (DCI) notification or a predetermined initial RV. For example, when the predetermined RV sequence is {0,2,3,1} and RV=0 is notified in the DCI for scheduling the PUSCH transmission, an RV of a configured with repetition transmission first PUSCH is 0, an RV of a second PUSCH is 2, and so on.

In a 5^{th-}Generation (5G) NR system, there exist various service types concurrently for a same terminal, e.g., Enhanced Mobile Broadband (eMBB) and Ultra Reliable & Low Latency Communication (URLLC). In R16 URLLC, considering that URLLC has a priority level higher than eMBB, when the SR overlaps the PUSCH and the SR is a URLLC SR, the SR cannot be dropped. In a possible mode, the PUSCH overlapping the SR is to be dropped. However, at this time, when the dropped PUSCH is a repetition PUSCH with RV=0, probably it is impossible to accurately decode the PUSCH configured with repetition transmission subsequently, and thereby a waste of resources occurs due to the subsequent repetition transmission.

Currently, when the repetition PUSCH overlaps the PUCCH carrying the SR, there is no definite scheme about how to perform the transmission when the SR overlaps the repetition PUSCH.

### SUMMARY

An object of the present disclosure is to provide a PUSCH transmission method, a terminal and a network device, so as to perform the transmission when the SR overlaps the repetition PUSCH.

In order to solve the above-mentioned technical problem, the present disclosure provides the following technical solutions.

In one aspect, the present disclosure provides in some embodiments a PUSCH transmission method for a terminal, including: when at least one PUSCH in a group of repetition PUSCHs overlaps a PUCCH carrying a first type of UCI, determining whether an RV of the at least one PUSCH is a predetermined RV; and when the RV of the at least one PUSCH is the predetermined RV, dropping the PUCCH carrying the first type of UCI or transmitting the first type of UCI in a next transmission opportunity, otherwise dropping the at least one PUSCH and transmitting the PUCCH carrying the first type of UCI.

In some possible embodiments of the present disclosure, the PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

In some possible embodiments of the present disclosure, the PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

In some possible embodiments of the present disclosure, a service type or a priority level or significance level of a service is determined through at least one of DCI, a Radio Network Temporary Identity (RNTI), a search space, a Control Resource Set (CORESET), a beam, a Block Error Rate (BLER), a Channel Quality Indicator (CQI) table, a Modulation and Coding Scheme (MCS) table, a priority level identifier, a PUCCH resource, or an SR configuration index.

In some possible embodiments of the present disclosure, the predetermined RV is a self-decoding RV.

In some possible embodiments of the present disclosure, the group of repetition PUSCHs includes a plurality of repetition PUSCHs carrying a same TB.

In another aspect, the present disclosure provides in some embodiments a PUSCH transmission method for a network device, including: when at least one PUSCH in a group of repetition PUSCHs overlaps a PUCCH carrying a first type of UCI, determining whether an RV of the at least one PUSCH is a predetermined RV; and when the RV of the at least one PUSCH is the predetermined RV, not receiving the PUCCH carrying the first type of UCI or receiving the PUCCH carrying the first type of UCI in a next transmission opportunity, otherwise not receiving the at least one PUSCH but receiving the PUCCH carrying the first type of UCI.

In some possible embodiments of the present disclosure, the PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

In some possible embodiments of the present disclosure, the PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

In some possible embodiments of the present disclosure, a service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

In some possible embodiments of the present disclosure, the predetermined RV is a self-decoding RV.

In some possible embodiments of the present disclosure, the group of repetition PUSCHs includes a plurality of repetition PUSCHs carrying a same TB.

In yet another aspect, the present disclosure provides in some embodiments a terminal, including a processor, a transceiver, and a memory storing therein a program executed by the processor. The processor is configured to execute the program so as to: when at least one PUSCH in a group of repetition PUSCHs overlaps a PUCCH carrying a first type of UCI, determine whether an RV of the at least one PUSCH is a predetermined RV; and when the RV of the at least one PUSCH is the predetermined RV, drop the PUCCH carrying the first type of UCI or transmit the first type of UCI in a next transmission opportunity, otherwise drop the at least one PUSCH and transmit the PUCCH carrying the first type of UCI.

In some possible embodiments of the present disclosure, the PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

In some possible embodiments of the present disclosure, the PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

In some possible embodiments of the present disclosure, a service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

In some possible embodiments of the present disclosure, the predetermined RV is a self-decoding RV.

In some possible embodiments of the present disclosure, the group of repetition PUSCHs includes a plurality of repetition PUSCHs carrying a same TB.

In still yet another aspect, the present disclosure provides in some embodiments a terminal, including: a processing module configured to, when at least one PUSCH in a group of repetition PUSCHs overlaps a PUCCH carrying a first type of UCI, determine whether an RV of the at least one PUSCH is a predetermined RV; and a transceiver module configured to, when the RV of the at least one PUSCH is the predetermined RV, drop the PUCCH carrying the first type of UCI or transmit the first type of UCI in a next transmission opportunity, otherwise drop the at least one PUSCH and transmit the PUCCH carrying the first type of UCI.

In still yet another aspect, the present disclosure provides in some embodiments a network device, including a processor, a transceiver, and a memory storing therein a program executed by the processor. The processor is configured to execute the program, so as to: when at least one PUSCH in a group of repetition PUSCHs overlaps a PUCCH carrying a first type of UCI, determine whether an RV of the at least one PUSCH is a predetermined RV; and when the RV of the at least one PUSCH is the predetermined RV, not receive the PUCCH carrying the first type of UCI or receive the PUCCH carrying the first type of UCI in a next transmission opportunity, otherwise not receive the at least one PUSCH but receive the PUCCH carrying the first type of UCI.

In some possible embodiments of the present disclosure, the PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

In some possible embodiments of the present disclosure, the PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

In some possible embodiments of the present disclosure, a service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

In some possible embodiments of the present disclosure, the predetermined RV is a self-decoding RV.

In some possible embodiments of the present disclosure, the group of repetition PUSCHs includes a plurality of repetition PUSCHs carrying a same TB.

In still yet another aspect, the present disclosure provides in some embodiments a network device, including: a processing module configured to, when at least one PUSCH in a group of repetition PUSCHs overlaps a PUCCH carrying a first type of UCI, determine whether an RV of the at least one PUSCH is a predetermined RV; and a transceiver module configured to, when the RV of the at least one PUSCH is the predetermined RV, not receive the PUCCH carrying the first type of UCI or receive the PUCCH carrying the first type of UCI in a next transmission opportunity, otherwise not receive the at least one PUSCH but receive the PUCCH carrying the first type of UCI.

In still yet another aspect, the present disclosure provides in some embodiments a computer-readable storage medium storing therein an instruction. The instruction is executed by a computer so as to implement the above-mentioned methods.

The present disclosure has the following beneficial effects.

According to the embodiments of the present disclosure, when the at least one PUSCH in the group of repetition PUSCHs overlaps the PUCCH carrying the first type of UCI, whether the RV of the at least one PUSCH is the predetermined RV is determined. When the RV of the at least one PUSCH is the predetermined RV, the PUCCH carrying the first type of UCI is dropped or the first type of UCI is transmitted in a next transmission opportunity, otherwise the at least one PUSCH is dropped and the PUCCH carrying the first type of UCI is transmitted. In addition, when the at least one PUSCH in the group of repetition PUSCHs overlaps the PUCCH carrying the first type of UCI, whether to drop the PUSCH or the first type of UCI is determined in accordance with whether the RV of the PUSCH overlapping the PUCCH carrying the first type of UCI is a self-decoding RV, so as to ensure that the PUSCH using the self-decoding RV is not dropped.

### BRIEF DESCRIPTION OF THE DRAWINGS

FIG. 1 is a schematic view showing a situation where a PUCCH probably overlaps a PUSCH;
FIG. 2 is a flow chart of a PUSCH transmission method according to one embodiment of the present disclosure;
FIG. 3 is a schematic view showing a configuration where the PUSCH is configured with repetition transmission for four times according to one embodiment of the present disclosure;
FIG. 4 is a schematic view showing a first implementation mode of the configuration in FIG. 3;
FIG. 5 is a schematic view showing a second implementation mode of the configuration in FIG. 3;
FIG. 6 is a flow chart of a PUSCH transmission method according to one embodiment of the present disclosure;
FIG. 7 is a schematic view showing architecture of a terminal according to one embodiment of the present disclosure; and
FIG. 8 is a schematic view showing architecture of a network device according to one embodiment of the present disclosure.

### DETAILED DESCRIPTION

The present disclosure will be described hereinafter in conjunction with the drawings and embodiments. The following embodiments are for illustrative purposes only, but shall not be used to limit the scope of the present disclosure. Actually, the embodiments are provided so as to facilitate the understanding of the scope of the present disclosure.

As shown in FIG. 2, the present disclosure provides in some embodiments a PUSCH transmission method for a terminal, which includes the following steps.

Step 21: when at least one PUSCH in a group of repetition PUSCHs overlaps a PUCCH carrying a first type of UCI, determining whether an RV of the at least one PUSCH is a predetermined RV. The predetermined RV is a self-decoding RV, e.g., RVO. The group of repetition PUSCHs includes a plurality of repetition PUSCHs carrying a same TB.

Step 22: when the RV of the at least one PUSCH is the predetermined RV, dropping the PUCCH carrying the first type of UCI or transmitting the first type of UCI in a next transmission opportunity, otherwise dropping the at least one PUSCH and transmitting the PUCCH carrying the first type of UCI.

According to the embodiments of the present disclosure, when the at least one PUSCH in the group of repetition PUSCHs overlaps the PUCCH carrying the first type of UCI, whether the RV of the at least one PUSCH is the predetermined RV is determined. When the RV of the at least one PUSCH is the predetermined RV, the PUCCH carrying the first type of UCI is dropped or the first type of UCI is transmitted in a next transmission opportunity, otherwise the at least one PUSCH is dropped and the PUCCH carrying the first type of UCI is transmitted. In addition, when the at least one PUSCH in the group of repetition PUSCHs overlaps the PUCCH carrying the first type of UCI, whether to drop the PUSCH or the first type of UCI is determined in accordance with whether the RV of the PUSCH overlapping the PUCCH carrying the first type of UCI is a self-decoding RV, so as to ensure that the PUSCH using the self-decoding RV is not dropped.

The transmission opportunity is a preconfigured or scheduled position for transmitting the first type of UCI each time. For example, a plurality of transmission opportunities is determined in advance in accordance with a configured period and a configured offset value. For example, when a period of the first type of UCI is one slot and a specific transmission position is a 13^{th} symbol and a 14^{th} symbol within each slot, the 13^{th} and 14^{th} symbols within each slot form one transmission opportunity. For another example, the transmission opportunity is scheduled, e.g., when one downlink transmission is scheduled through DCI each time, a specific slot or a specific symbol in a slot is indicated through the DCI as a transmission position of an HARQ-ACK for transmitting the downlink transmission scheduled by the DCI, and this transmission position forms a transmission opportunity. This transmission opportunity is not periodic, and it depends on the scheduling through the DCI.

In a possible embodiment of the present disclosure, the PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

The PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

A service type (the first type or the second type) or a priority level or significance level of a service is determined through at least one of DCI, an RNTI, a search space, a CORESET) a beam, a BLER, a CQI table, an MCS table, a priority level identifier, a PUCCH resource, or an SR configuration index.

For example, the first type of services includes a service corresponding to at least one of: a first type of DCI format, a first type of DCI size, a first type of RNTI, a first type of search space, a first type of CORESET, a first type of beam, a first type of BLER, a first type of CQI table, a first type of MCS table, a first type of priority level identifier, a first type of PUCCH resource, or a first type of SR configuration index. Whether the first type of UCI and the PUSCH correspond to the first type of services, i.e., the priority levels and the significance levels of the first type of UCI and the PUSCH, is determined in accordance with whether the first type of UCI and the PUSCH correspond to at least one of the above information.

The second type of services includes a service corresponding to at least one of: a second type of DCI format, a second type of DCI size, a second type of RNTI, a second type of search space, a second type of CORESET, a second type of beam, a second type of BLER, a second type of CQI table, a second type of MCS table, a second type of priority level identifier, a second type of PUCCH resource, or a second type of SR configuration index. Whether the first type of UCI and the PUSCH correspond to the second type of services, i.e., the priority levels and the significance levels of the first type of UCI and the PUSCH, is determined in accordance with whether the first type of UCI and the PUSCH correspond to at least one of the above information.

When it is specified in advance that the service corresponding to at least one of the first type of DCI format, the first type of DCI size, the first type of RNTI, the first type of search space, the first type of CORESET, the first type of beam, the first type of BLER, the first type of CQI table, the first type of MCS table, the first type of priority level identifier, the first type of PUCCH resource and the first type of SR configuration index has a priority level or significance level higher than the service corresponding to at least one of the second type of DCI format, the second type of DCI size, the second type of RNTI, the second type of search space, the second type of CORESET, the second type of beam, the second type of BLER, the second type of CQI table, the second type of MCS table, the second type of priority level identifier, the second type of PUCCH resource and the second type of SR configuration index, the priority levels and the significance levels of the first type of UCI and the PUSCH are determined in accordance with whether the first type of UCI and the PUSCH correspond to at least one of the above information.

It should be appreciated that, the first type of BLER is 10-5 BLER or 10-6 BLER; the first type of CQI table is a URLLC CQI table; the first type of MAC table is a URLLC MAC table; the first type of PUCCH resource is a resource with a small index or a specific index or a resource corresponding to a specific SR configuration index; and for the first type of SR configuration index, an SR configuration with a smaller index umber is considered to correspond to URLLC in the case that a plurality of SR configurations has been configured. The second type of BLER is 10-2 BLER or 10-1 BLER; the second type of CQI table is a 64 Quadrature Amplitude Modulation (QAM) or 256 QAM CQI table; the second type of PUCCH resource is a resource with a large index or a specific index or a resource corresponding to a specific SR configuration index; and for the second type of SR configuration index, an SR configuration with a larger index umber is considered to correspond to eMBB or non-URLLC in the case that a plurality of SR configurations has been configured.

In the embodiments of the present disclosure, the first type of service has a priority level or significance level higher than the second type of service.

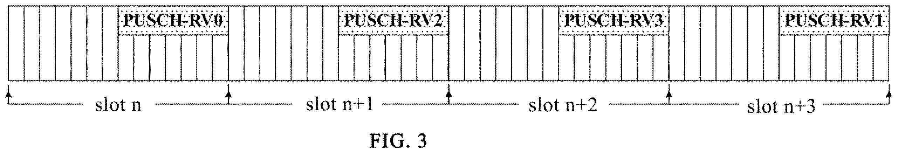

The specific implementation will be described hereinafter in conjunction with specific PUSCH transmission. As shown in FIG. 3, it is presumed that a PUSCH is configured with repetition transmission for four times, so the group of repetition PUSCHs includes four PUSCHs. When a predetermined RV sequence is {0,2,3,1} and an RV indication field in the DCI for scheduling the repetition transmission of the PUSCH indicates RV0, a first PUSCH is transmitted within a slot n and its RV is RVO. With RVO as a start point, in the RV sequence, an RV of a second PUSCH is RV2, an RV of a third PUSCH is RV3, and an RV of a fourth PUSCH is RV1.

First case: it is presumed that there is a PUCCH carrying a URLLC SR overlaps the PUSCH within the slot n. Because the RV of the PUSCH overlapping the SR is RV0, the terminal performs the operation in the following modes.

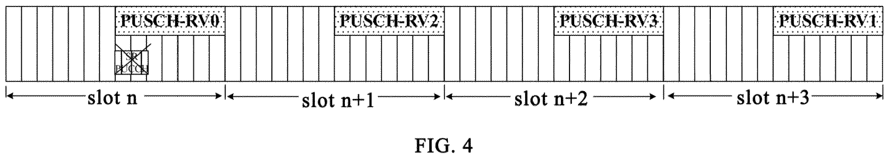

First mode: the terminal drops the SR, and transmits the first PUSCH and the subsequent three repeated PUSCHs, as shown in FIG. 4.

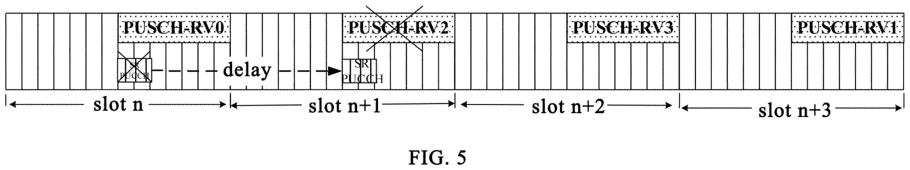

Second mode: the terminal transmits the SR in a next opportunity where the SR does not overlap RV0 PUSCH, e.g., in an SR transmission opportunity within a slot n+1. At this time, the SR also overlaps the PUSCH within the slot n+1, but the RV of the PUSCH within the slot n+1 is RV2 which is not a self-decoding RV, so the terminal drops the PUSCH within the slot n+1, and transmits the SR through the PUCCH. Within subsequent slots n+3 and n+4, the terminal transmits the PUSCH as before, because the PUSCH does not overlap the other PUCCH, as shown in FIG. 5.

A base station determines whether the first mode or the second mode is adopted by the terminal in a same manner as the terminal, and then performs the reception in a corresponding mode. The difference lies in that, the base station uniquely determines that the SR is not always transmitted by the terminal merely when the PUCCH resource carrying the SR overlaps the PUSCH with RV0, so the base station directly receives the PUSCH with RV0 rather than detecting the PUCCH carrying the SR. For the PUSCH with the other RV, when it overlaps the PUCCH resource carrying the SR, the base station does not know whether there is a positive SR on the PUCCH resource corresponding to the SR before detecting the PUCCH carrying the SR (the PUCCH transmission exists at a terminal side and the PUCCH overlaps the PUSCH only when there is the positive SR), so the base station is not sure whether the SR or the PUSCH is transmitted by the terminal. The base station needs to perform blind detection on the PUCCH resource carrying the SR and the PUSCH with an RV other than RVO. When no information has been detected on the PUCCH resource carrying the SR, the base station determines that there is no SR, and when information has been detected, the base station determines that there is the positive SR rather than the PUSCH.

Second case: it is presumed that there is a PUCCH carrying a URLLC SR overlaps the PUSCH within the slot n+3. Because the RV of the PUSCH overlapping the SR is not RV0, the terminal drops the PUSCH overlapping the SR within the slot n+3 and transmits the SR, and transmits the PUSCH normally within the other slots.

For the same reason as that in the first case, the base station directly receives the PUSCH within the slot n. Due to the RV0 of the PUSCH, even if there is the SR overlapping the PUSCH, the SR is dropped or delayed. The base station performs blind detection on an SR PUCCH resource and a PUSCH resource within the slots n+1 to n+3 so as to receive the PUCCH and the PUSCH. When information has been detected on the PUCCH resource, the base station determines that there is the SR rather than the PUSCH, and when no information has been detected on the PUCCH resource, the base station determines that there is no SR or the SR has been dropped or delayed, and there is merely the PUSCH within a current slot.

It should be appreciated that, the above description has been given when the URLLC SR PUCCH overlaps the PUSCH, and when the PUCCH carrying the other UCI overlaps the PUSCH, the method is also applicable in the case that the condition has been met. In principle, the method is not limited to a situation where the PUSCH is dropped as specified in the embodiments of the present disclosure, and when at least one of the configured-with-repetition-transmission PUSCHs needs to be dropped for the other reasons, the above-mentioned method is also applicable. For example, when the configured-with-repetition-transmission PUCCH overlaps the PUSCH and the RV of the PUSCH is RV0, the PUCCH is dropped and the PUSCH is transmitted, otherwise the PUSCH is dropped and the PUCCH is transmitted, different from the related art where the PUSCH is always dropped when the configured-with-repetition-transmission PUCCH overlaps the PUSCH. The PUSCH is a PUSCH for eMBB, and at this time, obviously the URLLC SR has a priority level and a significance level higher than the eMBB. The PUSCH is also a URLLC PUSCH. Although the PUSCH and the SR are both URLLC services, considering that a large time-domain length is occupied by the repetition PUSCH, a delay for the SR is too large when the SR is dropped. At this time, one or more of the repetition PUSCHs are dropped because the SR overlaps the repetition PUSCH. The above description has been given when the repetition transmission of the PUSCH is performed on the basis of slot. When there is a plurality of PUSCHs corresponding to one TB within one slot, i.e., there is the repetition transmission within the slot, the above-mentioned method is also applicable, and a difference lies in that there probably exists one PUCCH carrying the SR and overlapping a plurality of repetition PUSCHs. The PUSCH is also probably discarded partially, i.e., the transmission of the PUSCH is canceled or terminated after a part of the PUSCH has been transmitted. The PUSCH is not limited to a DCI-grant PUSCH or a grant-free PUSCH. When the PUSCH is a grant-free PUSCH, its RV sequence is different from that mentioned hereinabove, e.g., {0,0,0,0} or {0,3,0,3}.

According to the embodiments of the present disclosure, when the at least one PUSCH in the group of repetition PUSCHs overlaps the PUCCH carrying the first type of UCI, whether to drop the PUSCH or the first type of UCI is determined in accordance with whether the RV of the PUSCH overlapping the PUCCH carrying the first type of UCI is a self-decoding RV, so as to ensure that the PUSCH using the self-decoding RV is not dropped.

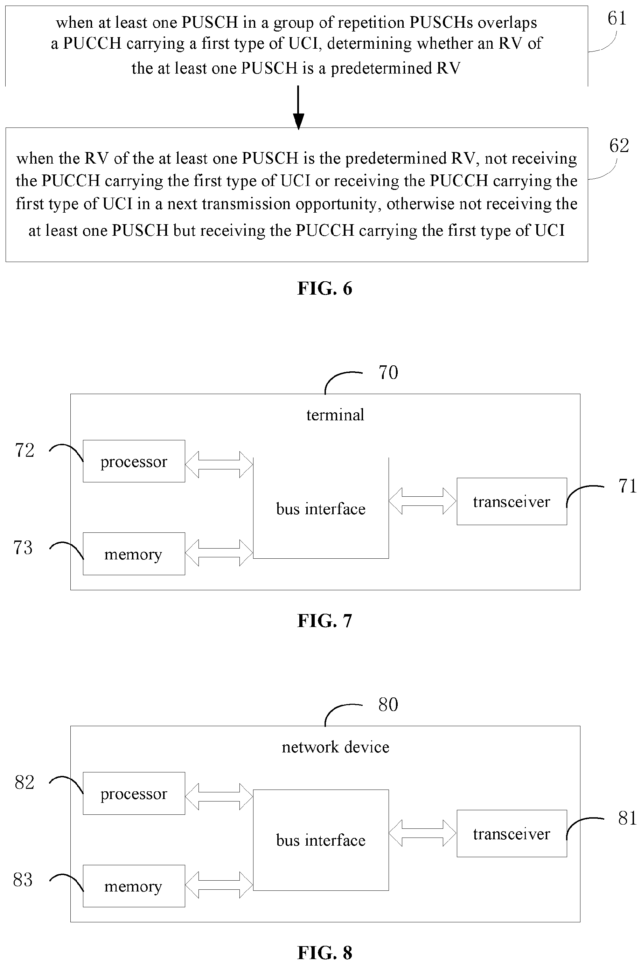

As shown in FIG. 6, the present disclosure further provides in some embodiments a PUSCH transmission method for a network device, which includes the following steps.

Step 61: when at least one PUSCH in a group of repetition PUSCHs overlaps a PUCCH carrying a first type of UCI, determining whether an RV of the at least one PUSCH is a predetermined RV. The predetermined RV is a self-decoding RV, e.g., RVO. The group of repetition PUSCHs includes a plurality of repetition PUSCHs carrying a same TB.

Step 62: when the RV of the at least one PUSCH is the predetermined RV, not receiving the PUCCH carrying the first type of UCI or receiving the PUCCH carrying the first type of UCI in a next transmission opportunity, otherwise not receiving the at least one PUSCH but receiving the PUCCH carrying the first type of UCI.

In a possible embodiment of the present disclosure, the PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

The PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

A service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

According to the embodiments of the present disclosure, when the at least one PUSCH in the group of repetition PUSCHs overlaps the PUCCH carrying the first type of UCI, whether to drop the PUSCH or the first type of UCI is determined in accordance with whether the RV of the PUSCH overlapping the PUCCH carrying the first type of UCI is a self-decoding RV, so as to ensure that the PUSCH using the self-decoding RV is not dropped.

As shown in FIG. 7, the present disclosure further provides in some embodiments a terminal 70, which includes a processor 72, a transceiver 71, and a memory 73 storing therein a program executed by the processor. The processor 72 is configured to execute the program so as to: when at least one PUSCH in a group of repetition PUSCHs overlaps a PUCCH carrying a first type of UCI, determine whether an RV of the at least one PUSCH is a predetermined RV; and when the RV of the at least one PUSCH is the predetermined RV, drop the PUCCH carrying the first type of UCI or transmit the first type of UCI in a next transmission opportunity, otherwise drop the at least one PUSCH and transmit the PUCCH carrying the first type of UCI.

The PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

The PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

A service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

The predetermined RV is a self-decoding RV.

The group of repetition PUSCHs includes a plurality of repetition PUSCHs carrying a same TB.

It should be appreciated that, the terminal is a terminal corresponding to the method in FIG. 2, and all implementation modes in the method embodiments are also adapted to the terminal embodiments with a same technical effect. The transceiver 71 is coupled to the processor 72 and the memory 73 via a bus interface. A function of the transceiver 71 is implemented by the processor 72, and a function of the processor 72 is also implemented by the transceiver 71.

The present disclosure further provides in some embodiments a terminal, which includes: a processing module configured to, when at least one PUSCH in a group of repetition PUSCHs overlaps a PUCCH carrying a first type of UCI, determine whether an RV of the at least one PUSCH is a predetermined RV; and a transceiver module configured to, when the RV of the at least one PUSCH is the predetermined RV, drop the PUCCH carrying the first type of UCI or transmit the first type of UCI in a next transmission opportunity, otherwise drop the at least one PUSCH and transmit the PUCCH carrying the first type of UCI.

The PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

The PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

A service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

The predetermined RV is a self-decoding RV.

The group of repetition PUSCHs includes a plurality of repetition PUSCHs carrying a same TB.

It should be appreciated that, the terminal is a terminal corresponding to the method in FIG. 2, and all the implementation modes in the method embodiments are also adapted to the terminal embodiments with a same technical effect.

As shown in FIG. 8, the present disclosure further provides in some embodiments a network device 80, which includes a processor 82, a transceiver 81, and a memory 83 storing therein a program executed by the processor 82. The processor 82 is configured to execute the program, so as to: when at least one PUSCH in a group of repetition PUSCHs overlaps a PUCCH carrying a first type of UCI, determine whether an RV of the at least one PUSCH is a predetermined RV; and when the RV of the at least one PUSCH is the predetermined RV, not receive the PUCCH carrying the first type of UCI or receive the PUCCH carrying the first type of UCI in a next transmission opportunity, otherwise not receive the at least one PUSCH but receive the PUCCH carrying the first type of UCI.

The PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

The PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

A service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

The predetermined RV is a self-decoding RV.

The group of repetition PUSCHs includes a plurality of repetition PUSCHs carrying a same TB.

It should be appreciated that, the network device is a network device corresponding to the method in FIG. 6, and all implementation modes in the method embodiments are also adapted to the network device embodiments with a same technical effect. The transceiver 81 is coupled to the processor 82 and the memory 83 via a bus interface. A function of the transceiver 81 is implemented by the processor 82, and a function of the processor 82 is also implemented by the transceiver 81.

The present disclosure further provides in some embodiments a network device, which includes: a processing module configured to, when at least one PUSCH in a group of repetition PUSCHs overlaps a PUCCH carrying a first type of UCI, determine whether an RV of the at least one PUSCH is a predetermined RV; and a transceiver module configured to, when the RV of the at least one PUSCH is the predetermined RV, not receive the PUCCH carrying the first type of UCI or receive the PUCCH carrying the first type of UCI in a next transmission opportunity, otherwise not receive the at least one PUSCH but receive the PUCCH carrying the first type of UCI.

The PUCCH is configured with repetition transmission, or the first type of UCI is an SR, or the first type of UCI is UCI corresponding to a first type of services, or the first type of UCI is an SR corresponding to the first type of services, and the first type of services includes a service having a high priority level or a high significance level or a URLLC service.

The PUSCH corresponds to a first type of services or a second type of services, the first type of services includes a service having a high priority level or a high significance level or a URLLC service, and the second type of services includes a service having a low priority level or a low significance level, an eMBB service or a non-URLLC service.

A service type or a priority level or significance level of a service is determined through at least one of DCI, an RNTI, a search space, a CORESET, a beam, a BLER, a CQI table, an MCS table, a priority level identifier, a PUCCH resource, or an SR configuration index.

The predetermined RV is a self-decoding RV.

The group of repetition PUSCHs includes a plurality of repetition PUSCHs carrying a same TB.

It should be appreciated that, the network device is a network device corresponding to the method in FIG. 6, and all implementation modes in the method embodiments are also adapted to the network device embodiments with a same technical effect.

The present disclosure further provides in some embodiments a computer-readable storage medium storing therein an instruction. The instruction is executed by a computer so as to implement the method in FIG. 2 or FIG. 6. The implementation modes in the method embodiments are also adapted to the embodiments involving the computer-readable storage medium with a same technical effect.

It should be appreciated that, units and steps described in the embodiments of the present disclosure are implemented in the form of electronic hardware, or a combination of a computer program and the electronic hardware. Whether or not these functions are executed by hardware or software depends on specific applications or design constraints of the technical solution. Different methods are adopted with respect to the specific applications so as to achieve the described functions, without departing from the scope of the present disclosure.

It should be further appreciated that, for convenience and clarification, operation procedures of the system, device and units described hereinabove refer to the corresponding procedures in the method embodiment, and thus will not be particularly defined herein.

It should be further appreciated that, the device and method are implemented in any other ways. For example, the embodiments for the apparatus are merely for illustrative purposes, and the modules or units are provided merely on the basis of their logic functions. During the actual application, some modules or units are combined together or integrated into another system. Alternatively, some functions of the module or units are omitted or not executed. In addition, the coupling connection, direct coupling connection or communication connection between the modules or units is implemented via interfaces, and the indirect coupling connection or communication connection between the modules or units is implemented in an electrical or mechanical form or in any other form.

The units are, or are not, physically separated from each other. The units for displaying are, or are not, physical units, i.e., they are arranged at an identical position, or distributed on a plurality of network elements. Parts or all of the units are selected in accordance with the practical need, so as to achieve the purpose of the present disclosure.

In addition, the functional units in the embodiments of the present disclosure are integrated into a processing unit, or the functional units exist independently, or two or more functional units are combined together.

In the case that the functional units are implemented in a software form and sold or used as a separate product, they are stored in a computer-readable medium. Based on this, the technical solutions of the present disclosure, partial or full, or parts of the technical solutions of the present disclosure contributing to the related art, appear in the form of software products, which are stored in a storage medium and include several instructions so as to enable computer equipment (a personal computer, a server or network equipment) to execute all or parts of the steps of the method according to the embodiments of the present disclosure. The storage medium includes any medium capable of storing therein program codes, e.g., a universal serial bus (USB) flash disk, a mobile hard disk (HD), a read-only memory (ROM), a random access memory (RAM), a magnetic disk or an optical disk.

It should be further appreciated that, according to the device and the method in the embodiments of the present disclosure, the members and/or steps are subdivided and/or recombined, which shall also be deemed as equivalents of the present disclosure. In addition, the steps for executing the above-mentioned processings are performed in a chronological order. Of course, some steps are also performed in parallel, or independently of each other. It should be further appreciated that, after reading the descriptions of the present disclosure, it is able for a person skilled in the art, using a basic programming skill, to implement any or all steps of the method and any or all members of the device in any computing device (including a processor and a storage medium) or a network consisting of the computing devices, in the form of hardware, firmware, software or a combination thereof.

Hence, the purposes of the present disclosure are also implemented by one program or a set of programs running on any computing device, e.g., a known general-purpose computer, or implemented merely by a program product including programs codes capable of implementing the method or device. In other words, this program product and a storage medium storing therein the program product also constitute a part of the present disclosure. Obviously, the storage medium is any known storage medium or a storage medium that occurs in future. It should be further appreciated that, according to the device and the method in the embodiments of the present disclosure, the members and/or steps are subdivided and/or recombined, which shall also be deemed as equivalents of the present disclosure. In addition, the steps for executing the above-mentioned processings are performed in a chronological order. Of course, some steps are also performed in parallel, or independently of each other.

It should be appreciated that, the embodiments of the present disclosure are implemented by hardware, software, firmware, middleware, microcode or a combination thereof. For the hardware implementation, the processor includes one or more of an Application Specific Integrated Circuits (ASIC), a Digital Signal Processor (DSP), a DSP device (DSPD), a Programmable Logic Device (PLD), a Field-Programmable Gate Array (FPGA), a general-purpose processor, a controller, a microcontroller, a microprocessor, any other electronic unit capable of achieving the functions in the present disclosure, or a combination thereof.

For the software implementation, the scheme in the embodiments of the present disclosure is implemented through modules capable of achieving the functions in the present disclosure (e.g., processes or functions). Software codes are stored in the memory and executed by the processor. The memory is implemented inside or outside the processor.

The expression "at least one of A and B" in the specification and the appended claims represents that there is only A, there are both A and B, and there is only B.

The above embodiments are for illustrative purposes only, but the present disclosure is not limited thereto. Obviously, a person skilled in the art may make further modifications and improvements without departing from the spirit of the present disclosure, and these modifications and improvements shall also fall within the scope of the present disclosure.

## Claims

1. A Physical Uplink Shared Channel (PUSCH) transmission method for a terminal, comprising:
when at least one PUSCH in a group of repetition PUSCHs overlaps a Physical Uplink Control Channel (PUCCH) carrying a first type of Uplink Control Information (UCI), determining whether a Redundant Version (RV) of the at least one PUSCH is a predetermined RV; and
when the RV of the at least one PUSCH is the predetermined RV, dropping the PUCCH carrying the first type of UCI or transmitting the first type of UCI in a next transmission opportunity, otherwise dropping the at least one PUSCH and transmitting the PUCCH carrying the first type of UCI.

2. The PUSCH transmission method according to claim 1, wherein the PUCCH is configured with repetition transmission, or the first type of UCI is a Scheduling Request (SR), or the first type of UCI is UCI corresponding to a first type of services, or the first type of UCI is an SR corresponding to the first type of services, wherein the first type of services comprises a service having a high priority level or a high significance level or a Ultra Reliable & Low Latency Communication (URLLC) service.

3. The PUSCH transmission method according to claim 1, wherein the PUSCH corresponds to a first type of services or a second type of services, the first type of services comprises a service having a high priority level or a high significance level or a URLLC service, and the second type of services comprises a service having a low priority level or a low significance level or an Enhanced Mobile Broadband (eMBB) service or a non-URLLC service.

4. The PUSCH transmission method according to claim 2 or 3, wherein a service type or a priority level or significance level of a service is determined through at least one of: Downlink Control Information (DCI), a Radio Network Temporary Identity (RNTI), a search space, a Control Resource Set (CORESET), a beam, a Block Error Rate (BLER), a Channel Quality Indicator (CQI) table, a Modulation and Coding Scheme (MCS) table, a priority level identifier, a PUCCH resource, or an SR configuration index.

5. The PUSCH transmission method according to any one of claims 1 to 3, wherein the predetermined RV is a self-decoding RV.

6. The PUSCH transmission method according to any one of claims 1 to 3, wherein the group of repetition PUSCHs comprises a plurality of repetition PUSCHs carrying a same Transport Block (TB).

7. A Physical Uplink Shared Channel (PUSCH) transmission method for a network device, comprising:
when at least one PUSCH in a group of repetition PUSCHs overlaps a Physical Uplink Control Channel (PUCCH) carrying a first type of Uplink Control Information (UCI), determining whether a Redundant Version (RV) of the at least one PUSCH is a predetermined RV; and
when the RV of the at least one PUSCH is the predetermined RV, not receiving the PUCCH carrying the first type of UCI or receiving the PUCCH carrying the first type of UCI in a next transmission opportunity, otherwise not receiving the at least one PUSCH but receiving the PUCCH carrying the first type of UCI.

8. The PUSCH transmission method according to claim 7, wherein the PUCCH is configured with repetition transmission, or the first type of UCI is a Scheduling Request (SR), or the first type of UCI is UCI corresponding to a first type of services, or the first type of UCI is an SR corresponding to the first type of services, and the first type of services comprises a service having a high priority level or a high significance level or a Ultra Reliable & Low Latency Communication (URLLC) service.

9. The PUSCH transmission method according to claim 7, wherein the PUSCH corresponds to a first type of services or a second type of services, the first type of services comprises a service having a high priority level or a high significance level or a URLLC service, and the second type of services comprises a service having a low priority level or a low significance level or an Enhanced Mobile Broadband (eMBB) service or a non-URLLC service.

10. The PUSCH transmission method according to claim 8 or 9, wherein a service type or a priority level or significance level of a service is determined through at least one of: Downlink Control Information (DCI), a Radio Network Temporary Identity (RNTI), a search space, a Control Resource Set (CORESET), a beam, a Block Error Rate (BLER), a Channel Quality Indicator (CQI) table, a Modulation and Coding Scheme (MCS) table, a priority level identifier, a PUCCH resource, or an SR configuration index.

11. The PUSCH transmission method according to any one of claims 7 to 9, wherein the predetermined RV is a self-decoding RV.

12. The PUSCH transmission method according to any one of claims 7 to 9, wherein the group of repetition PUSCHs comprises a plurality of repetition PUSCHs carrying a same Transport Block (TB).

13. A terminal, comprising a processor, a transceiver, and a memory storing therein a program executed by the processor, wherein the processor is configured to execute the program so as to: when at least one Physical Uplink Shared Channel (PUSCH) in a group of repetition PUSCHs overlaps a Physical Uplink Control Channel (PUCCH) carrying a first type of Uplink Control Information (UCI), determine whether a Redundant Version (RV) of the at least one PUSCH is a predetermined RV; and when the RV of the at least one PUSCH is the predetermined RV, drop the PUCCH carrying the first type of UCI or transmit the first type of UCI in a next transmission opportunity, otherwise drop the at least one PUSCH and transmit the PUCCH carrying the first type of UCI.

14. The terminal according to claim 13, wherein the PUCCH is configured with repetition transmission, or the first type of UCI is a Scheduling Request (SR), or the first type of UCI is UCI corresponding to a first type of services, or the first type of UCI is an SR corresponding to the first type of services, and the first type of services comprises a service having a high priority level or a high significance level or a Ultra Reliable & Low Latency Communication (URLLC) service.

15. The terminal according to claim 13, wherein the PUSCH corresponds to a first type of services or a second type of services, the first type of services comprises a service having a high priority level or a high significance level or a URLLC service, and the second type of services comprises a service having a low priority level or a low significance level or an Enhanced Mobile Broadband (eMBB) service or a non-URLLC service.

16. The terminal according to claim 14 or 15, wherein a service type or a priority level or significance level of a service is determined through at least one of: Downlink Control Information (DCI), a Radio Network Temporary Identity (RNTI), a search space, a Control Resource Set (CORESET), a beam, a Block Error Rate (BLER), a Channel Quality Indicator (CQI) table, a Modulation and Coding Scheme (MCS) table, a priority level identifier, a PUCCH resource, or an SR configuration index.

17. The terminal according to any one of claims 13 to 15, wherein the predetermined RV is a self-decoding RV.

18. The terminal according to any one of claims 13 to 15, wherein the group of repetition PUSCHs comprises a plurality of repetition PUSCHs carrying a same Transport Block (TB).

19. A terminal, comprising:
a processing module configured to, when at least one Physical Uplink Shared Channel (PUSCH) in a group of repetition PUSCHs overlaps a Physical Uplink Control Channel (PUCCH) carrying a first type of Uplink Control Information (UCI), determine whether a Redundant Version (RV) of the at least one PUSCH is a predetermined RV; and
a transceiver module configured to, when the RV of the at least one PUSCH is the predetermined RV, drop the PUCCH carrying the first type of UCI or transmit the first type of UCI in a next transmission opportunity, otherwise drop the at least one PUSCH and transmit the PUCCH carrying the first type of UCI.

20. A network device, comprising a processor, a transceiver, and a memory storing therein a program executed by the processor, wherein the processor is configured to execute the program, so as to: when at least one Physical Uplink Shared Channel (PUSCH) in a group of repetition PUSCHs overlaps a Physical Uplink Control Channel (PUCCH) carrying a first type of Uplink Control Information (UCI), determine whether a Redundant Version (RV) of the at least one PUSCH is a predetermined RV; and when the RV of the at least one PUSCH is the predetermined RV, not receive the PUCCH carrying the first type of UCI or receive the PUCCH carrying the first type of UCI in a next transmission opportunity, otherwise not receive the at least one PUSCH but receive the PUCCH carrying the first type of UCI.

21. The network device according to claim 20, wherein the PUCCH is configured with repetition transmission, or the first type of UCI is a Scheduling Request (SR), or the first type of UCI is UCI corresponding to a first type of services, or the first type of UCI is an SR corresponding to the first type of services, and the first type of services comprises a service having a high priority level or a high significance level or a Ultra Reliable & Low Latency Communication (URLLC) service.

22. The network device according to claim 20, wherein the PUSCH corresponds to a first type of services or a second type of services, the first type of services comprises a service having a high priority level or a high significance level or a URLLC service, and the second type of services comprises a service having a low priority level or a low significance level or an Enhanced Mobile Broadband (eMBB) service or a non-URLLC service.

23. The network device according to claim 21 or 22, wherein a service type or a priority level or significance level of a service is determined through at least one of: Downlink Control Information (DCI), a Radio Network Temporary Identity (RNTI), a search space, a Control Resource Set (CORESET), a beam, a Block Error Rate (BLER), a Channel Quality Indicator (CQI) table, a Modulation and Coding Scheme (MCS) table, a priority level identifier, a PUCCH resource, or an SR configuration index.

24. The network device according to any one of claims 20 to 22, wherein the predetermined RV is a self-decoding RV.

25. The network device according to any one of claims 20 to 22, wherein the group of repetition PUSCHs comprises a plurality of repetition PUSCHs carrying a same Transport Block (TB).

26. A network device, comprising:
a processing module configured to, when at least one Physical Uplink Shared Channel (PUSCH) in a group of repetition PUSCHs overlaps a Physical Uplink Control Channel (PUCCH) carrying a first type of Uplink Control Information (UCI), determine whether a Redundant Version (RV) of the at least one PUSCH is a predetermined RV; and
a transceiver module configured to, when the RV of the at least one PUSCH is the predetermined RV, not receive the PUCCH carrying the first type of UCI or receive the PUCCH carrying the first type of UCI in a next transmission opportunity, otherwise not receive the at least one PUSCH but receive the PUCCH carrying the first type of UCI.

27. A computer-readable storage medium storing therein an instruction, wherein the instruction is executed by a computer so as to implement the PUSCH transmission method according to any one of claims 1 to 6 or the PUSCH transmission method according to any one of claims 7 to 12.
